# EUROPÄISCHE PATENTSCHRIFT

(11) **EP 2 338 634 B1**
(45) Veröffentlichungstag und Bekanntmachung des Hinweises auf die Patenterteilung: **06.06.2018**
(21) Anmeldenummer: 10405236.0
(22) Anmeldetag: 14.12.2010
(51) Int. Cl.: B23K 26/073, B23K 26/38, B23K 26/08, B23K 26/04, B24C 1/04, B26F 3/00

(54) **Verfahren und Vorrichtung zum Trennen einer Materialschicht entlang einer vorgegebenen Trennlinie mittels eines Schneidstrahls**
Processes and device for separating a part of material along a predetermined separating line using a cutting beam
Procédés et dispositif de séparation d'une partie de matériau le long d'une ligne de séparation prédéterminée utilisant un faisceau de coupage

(30) Priorität: 17.12.2009 CH 19372009
(43) Veröffentlichungstag der Anmeldung: 29.06.2011
(73) Patentinhaber: Microwaterjet AG, 4912 Aarwangen (CH)
(72) Erfinder: Maurer, Walter, 4665 Oftringen (CH)
(74) Vertreter: AMMANN PATENTANWÄLTE AG BERN

(56) Entgegenhaltungen:
- JP-A- 5 019 825
- US-A- 5 585 018
- US-A- 5 609 284
- US-B1- 6 922 605

## Beschreibung

Die vorliegende Erfindung bezieht sich auf Verfahren und eine Trennvorrichtung zum Trennen einer Materialschicht mittels eines Schneidstrahles gemäß dem Oberbegriff der Ansprüche 1-2 und 10 (siehe Z.B. US6 922 605 B1). Der Schneidstrahl kann z. B. in Form eines Flüssigkeits- oder Laserstrahls ausgebildet sein (siehe betreffend Wasserstrahlschneiden z. B. die Patentschriften US 6,766,216 B2 oder US 6,922,605 B1). Der Schneidstrahl, welcher sich beim Austritt aus dem Schneidkopf bildet, weist keine festbleibende Geometrie auf, sondern bildet eine Art dynamisches Werkzeug, dessen Einwirkung auf die zu trennende Materialschicht sich in zeitlicher Weise ändern kann.

Zur Positionierung des Schneidstrahls in Bezug auf eine Trennlinie, entlang welcher ein bestimmte Materialschicht getrennt werden soll, ist es bekannt, den Schneidstrahlquerschnitt als kreisrund und unveränderlich zu betrachten. Diese Betrachtungsweise beschränkt jedoch die Grenzen der Genauigkeiten, mit welchen eine Materialschicht getrennt werden kann. Für ein sehr genaues Trennen ist dieses Modell nicht tauglich.

Die japanische Patentanmeldung JP 5 019825 A betrifft ein Verfahren, bei welchem mittels eines NC-gesteuerten Laserstrahls entlang einer Kreislinie geschnitten wird. Es wird vorgeschlagen, einen Versatz des Laserstrahls in radialer Richtung vorzusehen, um die Verzögerung des Servosystems der NC-Steuerung zu kompensieren.
Aus der US 5,609,284 ist eine von hier verschiedene Technik beschrieben, welche zum Trennen einer Materialschicht aus Glas geeignet ist. Anstelle eines Schneidstrahls wird bei dieser Technik abwechselnd Hitze und Kälte eingesetzt, um eine Glasschicht zu trennen. Dabei wird zuerst ein nicht durchgehender Riss gebildet, indem das Glas mittels Laserstrahl erhitzt und dann mittels eines Kühlmittels gekühlt wird. Durch neuerliches Erhitzen vergrössert sich die Tiefe des Risses bis zur vollständigen Trennung der Glasschicht.
Es ist eine Aufgabe der vorliegenden Erfindung, ein Verfahren anzugeben, welches ein präzises Trennen einer Materialschicht mittels eines Schneidstrahls erlaubt.
Ein Verfahren, das diese Aufgabe löst, ist im Anspruch 1 bzw. 2 angegeben. Eine Trennvorrichtung, die diese Aufgabe löst, ist im Anspruch 10 angegeben. Die weiteren Ansprüche geben bevorzugte Ausführungen des Verfahrens, der Trennvorrichtung, sowie eine Verwendung des Verfahrens und/oder der Trennvorrichtung an.

Beim Verfahren wird der Abstand, um welchen der Schneidstrahl seitlich versetzt zur Trennlinie auf eine Materialschicht auftrifft, gemäss dem Anspruch 1 in Abhängigkeit der Änderungen in der Verfahrgeschwindigkeit, mit welcher der Schneidstrahl verfahren wird, und gemäss dem Anspruch 2 in Abhängigkeit der Abweichungen des wirksamen Schneidstrahlquerschnittes von einer kreisrunden Form festgelegt. Dies ermöglicht jeweils ein präzises Trennen der Materialschicht.

Die Erfindung wird im Folgenden anhand von Ausführungsbeispielen unter Bezugnahme auf Figuren erläutert. Es zeigen
Fig. 1 eine perspektivische Ansicht einer erfindungsgemässen Trennvorrichtung;
Fig. 2 eine teilweise geschnittene Seitenansicht einer Materialschicht, die mit einer Trennvorrichtung gemäss Fig. 1 getrennt wird;
Fig. 3 ein Ausführungsbeispiel einer die Schneidstrahlgeometrie repräsentierende Querschnittsform;
Fig. 4 eine Draufsicht eines Werkstückes, welches unter Verwendung des Ausführungsbeispiels gemäss Fig. 3 geschnitten wird, wobei die erfindungsgemäss modifizierte Bearbeitungsbahn ebenfalls angedeutet ist;
Fig. 5 ein weiteres Ausführungsbeispiel einer die Schneidstrahlgeometrie repräsentierende Querschnittsform;
Fig. 6 die geometrische Einwirkung des Schneidstrahls auf ein Werkstück bei drei verschiedenen Verfahrgeschwindigkeiten;
Fig. 7 ein Beispiel des Verlaufs der Verfahrgeschwindigkeit V, mit welcher der Schneidstrahl entlang einer Trennlinie bewegt wird, wobei S der von einem Startpunkt zurückgelegte Weg bedeutet;
Fig. 8 den zu Fig. 7 entsprechenden Verlauf des Abstandes W zwischen Schneidstrahl und Trennlinie als Funktion von S;
Fig. 9 eine Draufsicht eines Werkstückes, welches mit einem Schneidstrahl geschnitten wird, wenn W in Abhängigkeit von V bestimmt wird;
Fig. 10 ein Variante einer Trennvorrichtung mit einem geneigten Schneidkopf in einer Seitenansicht; und
Fig. 11 die Draufsicht eines Werkstücks, in welches ein Loch mit der Trennvorrichtung gemäss Fig. 10 erzeugt worden ist.

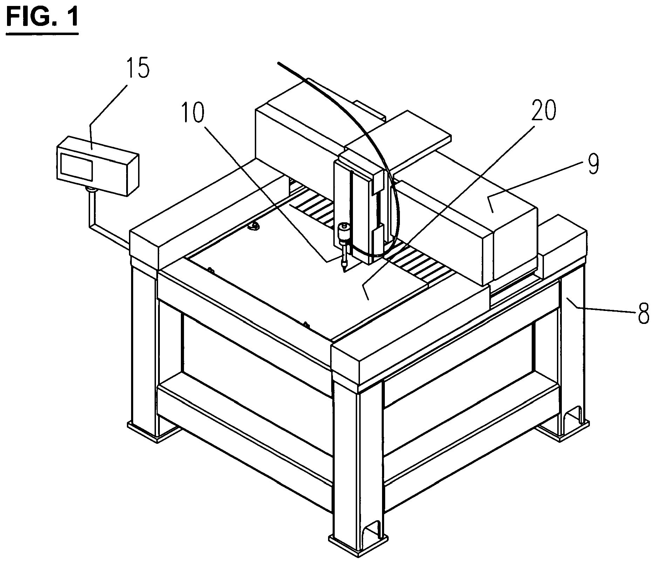

Fig. 1 zeigt eine Trennvorrichtung mit einem auf dem Boden stehenden Rahmengestell 8, auf welchem eine verfahrbare Brücke 9 angeordnet ist. Auf dieser ist ein Schneidkopf 10 angeordnet, welcher quer zur Brücke 9 verfahrbar ist und somit in der Ebene sowie vertikal dazu verfahrbar ist. Die Ansteuerung des Schneidkopfes 10 erfolgt über eine Steuerung 15, beispielsweise eine numerische Steuerung in Form einer CNC-Steuerung.

Beim Trennprozess tritt aus dem Schneidkopf 10 ein Schneidstrahl aus, mittels welchem eine Materialschicht 20 in Form eines Werkstückes getrennt wird. Als Schneidstrahl eignen sich z. B. folgende Arten: Wasserstrahl aus reinem Wasser zum Reinwasserschneiden oder aus Wasser mit beigefügtem Abrasivmaterial zum Abrasivwasserschneiden, ein aus einer anderen Flüssigkeit gebildeter Strahl oder auch ein aus einem anderen Medium gebildeter Strahl, beispielsweise Laserstrahl, Plasmastrahl, Brennschneidstrahl, etc. Die Trennvorrichtung ist mit den üblichen Komponenten ausgerüstet, um den entsprechenden Schneidstrahl zu erzeugen.

Die Steuerung 15 umfasst übliche Geräten zur Eingabe und Ausgabe von Informationen, wie Tastatur, Monitor und/oder Zeigegerät (z. B. Touchscreen), etc. und Mittel zur Datenverarbeitung und zur Erzeugung von Steuersignalen, welche im Betrieb ein Verfahren des Schneidkopfes 10 bewirken. Vorzugsweise umfassen diese Mittel einen Computer, der eine Zentraleinheit (CPU) und einen Speicher, z. B. in Form eines Schreib-Lese-Speichers (RAM) und/oder eine Harddisk aufweist.

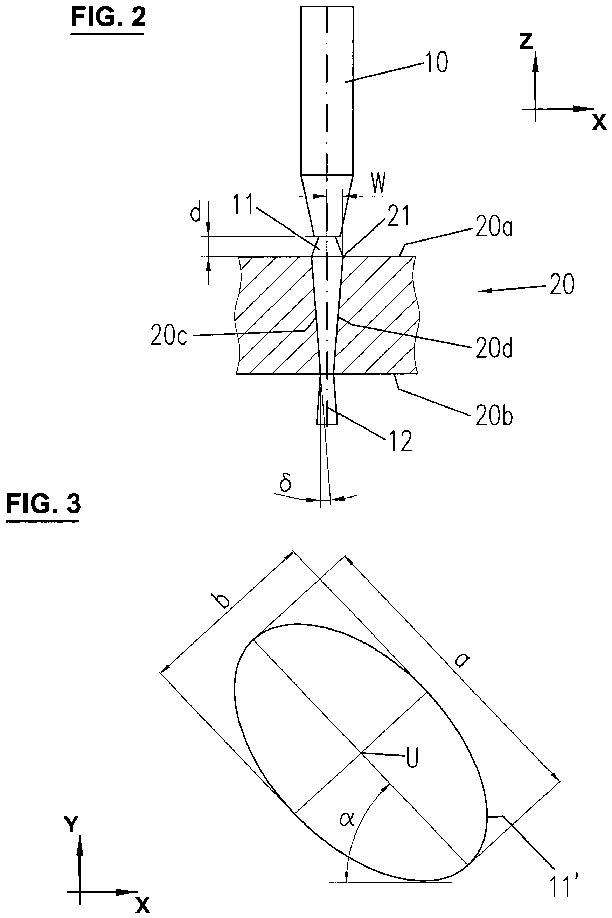

Fig. 2 zeigt schematisch einen Schneidstrahl 11, der aus einem Fokussierrohr des Schneidkopfs 10 austritt und sich in Ausbreitungsrichtung 12 ausbreitet. Dabei trifft der Schneidstrahl 11 auf die Oberseite 20a der Materialschicht 20, durchdringt diese und tritt an der Unterseite 20b der Materialschicht 20 aus.

Im Schnitt gemäss Fig. 2 ist die vorgegebene Trennlinie 21, entlang welcher die Materialschicht getrennt werden soll, lediglich als Punkt zu sehen. Der Schneidstrahl 11, der eine Ausdehnung quer zur Ausbreitungsrichtung 12 aufweist, wird um eine Distanz W seitlich versetzt zur Trennlinie 21 angeordnet. Somit entsteht in der Materialschicht 20 eine Trennwand, die der gewünschten Trennlinie 21 folgt.

Der Wert, der für die Distanz W zu wählen ist, hängt von der aktuellen geometrischen Form des Schneidstrahls 11 ab. Einerseits kann der wirksame Querschnitt, der der Schneidstrahl 11 beim Auftreffen auf die Materialschicht 20 aufweist, von einer Kreisscheibe abweichen. Anderseits hängt die auf die Materialschicht wirkende Querschnittsfläche des Schneidstrahls 11 davon ab, mit welcher Verfahrgeschwindigkeit (auch als Vorschubgeschwindigkeit bezeichnet) der Schneidstrahl 11 verfahren wird. Diese beiden Möglichkeiten werden in den nachfolgenden Abschnitten A) und B) genauer erläutert:

### A) Nichtkreisförmigkeit des Schneidstrahls

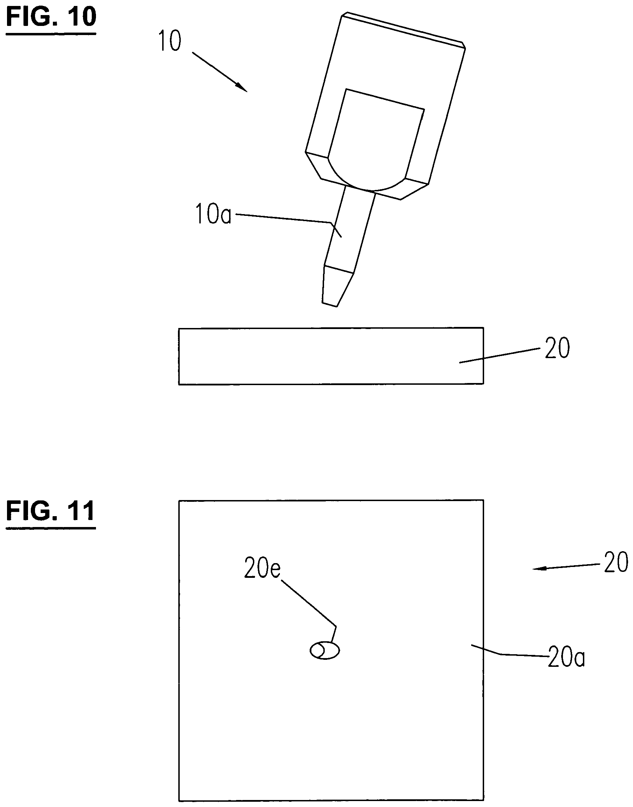

Im Rahmen der vorliegenden Erfindung wurde festgestellt, dass der Schneidstrahl 11, wie er z. B. beim Reinwasserstrahlschneiden oder Abrasivwasserstrahlschneiden erzeugt wird, im Querschnitt senkrecht zur Ausbreitungsrichtung 12 gesehen von einer kreisrunden Form abweichen kann. Eine derartige Nichtkreisförmigkeit kann z. B. davon herrühren, dass es im Schneidkopf 10 mit zunehmender Betriebsdauer zu einem Verschleiss kommen kann, der lokal gesehen ungleichmässig ist. Beispielsweise weist der Schneidkopf 10 für das Wasserstrahlschneiden ein Fokussierrohr 10a auf (vgl. Fig. 10), aus welchem der Schneidstrahl 11 austritt und welches einem Verschleiss unterworfen ist. Dieser kann insbesondere beim Abrasivwasserschneiden unsymmetrisch sein, wenn beispielsweise die Abrasivteilchen seitlich dem Schneidkopf 10 zugeführt werden und daher die Beladung des Schneidstrahlquerschnitts geometrisch inhomogen ist.

Es ist auch möglich, dass bereits bei der Herstellung des Schneidkopfes, insbesondere des Fokussierrohrs 10a, Abweichungen von einer kreisrunden Form auftreten, z. B. aufgrund von Herstellungstoleranzen, und daher der wirksame Querschnitt des Schneidstrahls nicht kreisrund ist.

Eine Nichtkreisförmigkeit des wirksamen Querschnitts des Schneidstrahls 11 kann auch bei einer Schrägstellung des Schneidkopfes 10 auftreten:
Wird ein Schneidstrahl 11, wie er in Fig. 2 gezeigt ist, zu schnell oder zu langsam verfahren, so entsteht in der Regel ein Schnittspalt, der durch nicht-parallele Schnittkanten begrenzt ist. Die Schnittkanten 20c, 20d weisen demnach gegenüber der Senkrechten auf der Werkstücksoberfläche 20a eine Neigung δ auf (vgl. Fig. 2). Diese Neigung wird auch als "Taper" bezeichnet. Wird der Schneidkopf 10 beim Schneidprozess gegenüber der Vertikalen geneigt (vgl. Fig. 10), so kann der "Taper" zumindest an einer der Schnittkanten 20c, 20d ausgeglichen werden. Die Schrägstellung des Schneidkopfes 10 bewirkt aber, dass der Schneidstrahl 11, selbst wenn er senkrecht zur Ausbreitungsrichtung kreisrund ist, mit einem nichtkreisrunden Querschnitt auf das Werkstück 20 auftrifft. In Fig. 11 ist ein Beispiel eines Werkstücks 20 gezeigt, in welches ein Loch 20e bei einer gemäss Fig. 10 geneigten Stellung des Schneidkopfes 10 erzeugt worden ist. Wie ersichtlich weist das Loch 20e eine nicht-kreisrunde Form auf.

Zur Berücksichtigung der oben erwähnten Nichtkreisförmigkeiten des Schneidstrahls 11 wird wie folgt vorgegangen:
In einem ersten Schritt wird die aktuelle geometrische Form des Schneidstrahls 11 messtechnisch erfasst, z. B. mittels einer optischen Einrichtung. Es ist auch möglich, mit dem Schneidstrahl 11 ein oder mehrere Testlöcher in einer Materialschicht 20 zu erzeugen und die dabei entstandene Form auszumessen. Bei einem neigbaren Schneidkopf 10 können verschiedene Neigungswinkel gewählt werden, um die Testlöcher zu erzeugen.

Anschliessend wird eine Ellipse 11' an die gemessene Form gefittet, indem z. B. die Methode der kleinsten Quadrate oder ein anderes geeignetes mathematisches Anpassungsverfahren verwendet wird. Daraus ergeben sich folgende Parameter (siehe Fig. 3): die Lage des Nullpunktes U der Ellipse 11' in Bezug auf ein gegebenes Koordinatensystem X, Y, Z, die Länge der Hauptachse a sowie der Nebenachse b und den Winkel α, um welchem die Ellipse 11' gegenüber einer der Achsen, z. B. der X-Achse gedreht ist.

Nebst den oben erwähnten Messungen können auch empirische Modelle angewendet werden, um z. B. eine zeitliche Änderung der in Fig. 3 gezeigten Ellipsenparameter zu bestimmen. Beispielsweise kann berücksichtigt werden, dass sich der Winkel α zeitlich ändern kann, z. B. wenn sich die Innengeometrie des Fokussierrohres 10a aufgrund des Verschleisses ändert. Ist der Schneidkopf 10 geneigt angeordnet und/oder rotierbar, so sind die empirischen Modelle ebenfalls einsetzbar, um die Ellipsenparameter in Abhängigkeit des Rotations- bzw. Neigungswinkels zu bestimmen.

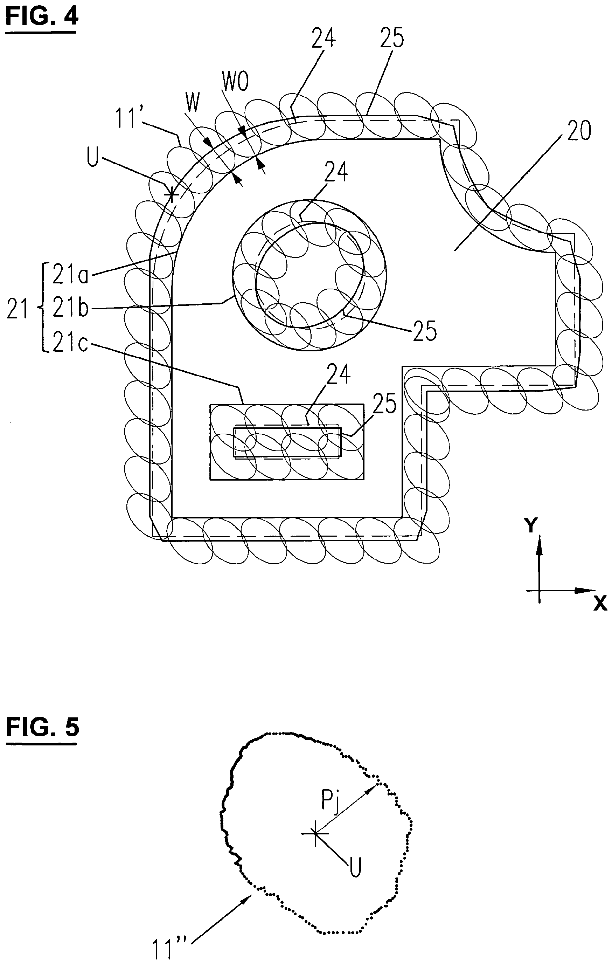

Fig. 4 zeigt ein Beispiel eines Werkstücks 20 mit einer bestimmten Form, welche aus einer Materialschicht herausgeschnitten werden soll. Die Kontur 21 definiert die Form der Oberfläche, welche das Werkstück 20 an der Oberseite aufweisen soll. Im vorliegenden Beispiel weist das Werkstück 20 zwei Ausnehmungen auf, so dass sich die Kontur 21 aus einer Aussenkontur 21a und zwei Innenkonturen 21b und 21c zusammensetzt.

Daten, welche die Kontur 21 definieren, sowie Daten zu den Parametern a, b, α, U der gefitteten Ellipse 11' werden der Steuerung 15 übergeben. Diese berechnet anhand eines Programmes den Abstand W, um welchen der Schneidstrahl 11 bzw. der Nullpunkt U seitlich versetzt zur Kontur 21 anzuordnen ist, so dass die gefittete Ellipse 11' an der Kontur 21 anliegt. Die Berechnung von W kann z. B. als Funktion des Weges S erfolgen, den der Schneidstrahl 11 vom Startpunkt zurücklegt, wenn er entlang der Kontur 21 verfahren wird. In Fig. 4 sind an verschiedenen Stellen die Ellipsen 11' eingezeichnet. Im vorliegenden Beispiel ist die Trennvorrichtung so eingerichtet, dass der Schneidkopf 10 seine Orientierung beibehält, wenn er in der Ebene verfahren wird. Der Winkel α bleibt somit unverändert.

Die ausgezogene Linie 25 in Fig. 4 definiert die Bahn des Nullpunktes U und somit den jeweiligen Abstand W. Wie ersichtlich verändert sich W, wenn der Schneidstrahl 11 entlang der Kontur 21 verfahren wird. Zum Vergleich zeigt die gestrichelte Linie 24 die Bahn des Nullpunktes, welche sich bei einem konstanten kreisrunden Querschnitts des Schneidstrahls 11 ergäbe und welche in diesem Fall einem konstanten Abstand W0 von der Kontur 24 entspricht. In der Steuerungstechnik wird dieser konstante Abstand WO auch als "Werkzeugradiuskorrektur" bezeichnet. Die Differenz zwischen den beiden Linien 24 und 25 widerspiegelt die erhöhte Genauigkeit, mit welcher das Werkstück 20 geschnitten wird.

Zur weiteren Erhöhung der Genauigkeit ist es denkbar, die gemessene Form des Schneidstrahls 11 nicht auf eine Ellipse, sondern mathematisch auf eine andere geometrischen Form abzubilden, die durch mehr Parameter charakterisiert ist, als sie die Ellipse aufweist. Beispielsweise kann der gemessenen Form des Schneidstrahls 11 eine Folge von N Punkten Pj zugeordnet werden, wobei jeder Punkt Pj durch seine Koordinaten in Bezug auf den Nullpunkt U definiert ist (vgl. Fig. 5). Die Punkte Pj zusammen bilden somit eine Art Punktewolke 11''. Der jeweilige Punkt Pj ist z. B. so festgelegt, dass er auf der Kontur der gemessenen Form des Schneidstrahls 11 liegt.

Zur Berechnung des Abstandes W werden die Parameter, welche die Punktewolke 11'' definieren, der Steuerung 15 übergeben und zusammen mit den Daten der zu schneidenden Kontur 21 durch das Programm verarbeitet.

### B) Variabler Abtrag des Schneidstrahls

Nebst einer Nichtkreisförmigkeit des Schneidstrahlquerschnitts kann es auch dann zu einem ungenauen Schneiden kommen, wenn sich die geometrisch wirksame Form des Schneidstrahls 11 bei einer Änderung in der Verfahrgeschwindigkeit V ändert, mit welcher er verfahren wird. Die Einwirkung des Schneidstrahls auf die Materialschicht, wenn dieser quer zur oberen Fläche der Materialschicht mit Geschwindigkeit V bewegt wird, kann sich ändern, wenn V sich ändert, selbst dann, wenn z. B. der Abstand zwischen dem Schneidkopf und der oberen Fläche konstant bleibt (vgl. Fig. 2, in welcher dieser Abstand als Arbeitsabstand d eingezeichnet ist). Nachfolgend wird der Durchstosspunkt der Ausbreitungsrichtung 12 des Schneidstrahls 11 mit der Oberseite 20a der Materialschicht 20 (vgl. Fig. 2) auch als Nullpunkt des Schneidstrahls 11 bezeichnet.

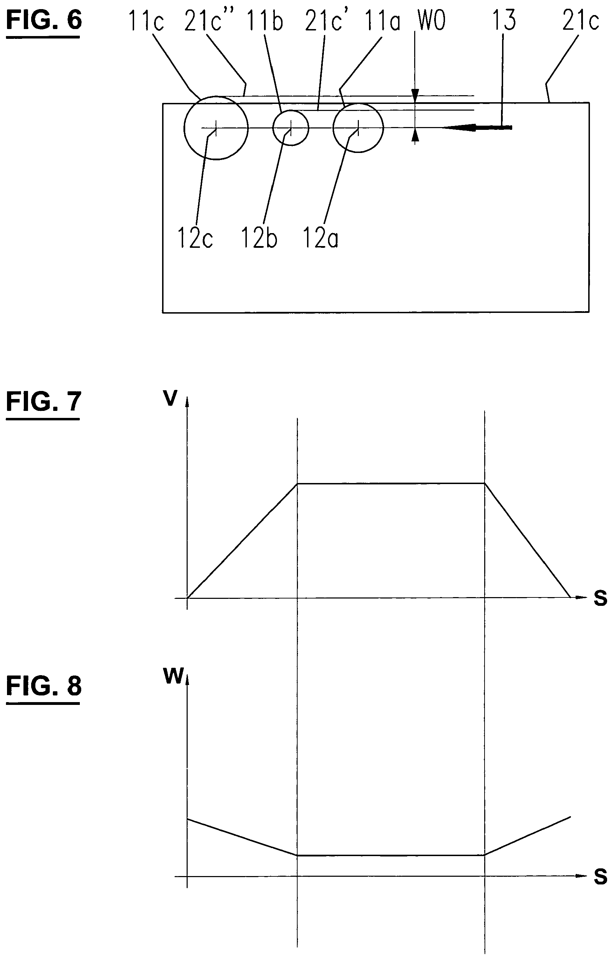

Fig. 6 zeigt ein Beispiel, bei welchem eine Innenkontur 21c bei drei verschiedenen Verfahrgeschwindigkeiten geschnitten wird:
- Wird der Schneidstrahl 11a in Richtung 13 mit der optimalen Verfahrgeschwindigkeit V0 verfahren, so liegt der Schneidstrahl 11a an der gewünschten Trennlinie 21c an und es resultieren Schnittkanten, welche im Gegensatz zu den Schnittkanten 20c und 20d in Fig. 2 parallel sind. Der Abstand zwischen Nullpunkt 12a des Schneidstrahls 11a und Trennlinie 21c ist durch W0 gegeben und entspricht der halben Breite des Schnittspaltes.
- Wird der Schneidstrahl 11b mit einer Verfahrgeschwindigkeit verfahren, die grösser als V0 ist, so ist der Abtrag durch den Schneidstrahl 11b im Bereich des Strahleintrittes reduziert. Es resultiert eine Trennlinie 21c', die nach innen versetzt zur gewünschten Trennlinie 21c angeordnet ist. Damit der Schnitt entlang der gewünschten Trennlinie 21c erfolgt, ist der Abstand zwischen der Trennlinie 21c und des Nullpunktes 12b des Schneidstrahls 11b kleiner als W0 zu wählen.
- Wird der Schneidstrahl 11c mit einer Verfahrgeschwindigkeit verfahren, die kleiner als V0 ist, so ist der Abtrag durch den Schneidstrahl 11c im Bereich des Strahleintrittes erhöht. Es resultiert eine Trennlinie 21c'', die nach aussen versetzt zur gewünschten Trennlinie 21c angeordnet ist. Damit der Schnitt entlang der gewünschten Trennlinie 21c erfolgt, ist der Abstand zwischen der Trennlinie 21c und des Nullpunktes 12c des Schneidstrahls 11c grösser als W0 zu wählen.

Der Zusammenhang zwischen der Verfahrgeschwindigkeit V und dem dabei zu wählenden Abstand W, mit welchem der Schneidstrahl seitlich zur gewünschten Trennlinie anzuordnen ist, so dass der Schnitt entlang dieser Trennlinie erfolgt, kann im Rahmen von empirischen Modellen bestimmt werden. Es ist auch denkbar, den Zusammenhang experimentell zu ermitteln. Dazu werden Schnitte in einem Werkstück der zu bearbeitenden Art mit unterschiedlichen Verfahrgeschwindigkeiten erzeugt und die Breite des Schnittspaltes, der jeweils auf der Oberseite des Werkstücks entsteht und dem Doppelten von W entspricht, ausgemessen.

Die Daten von V und dem dazugehörenden W werden z. B. in Form einer Tabelle oder auch in Form einer gefitteten Funktion der Steuerung 15 übergeben und dort gespeichert. Zusammen mit den Daten, welche die zu schneidende Kontur definieren, berechnet die Steuerung 15 anhand eines Programmes den Abstand W, um welchen der Schneidstrahl 11 seitlich versetzt zur Kontur anzuordnen ist, so dass die geschnittene Kontur der gewünschten Kontur entspricht.

Figuren 7 und 8 zeigen ein Beispiel von V und dem dazugehörenden W jeweils in Abhängigkeit der Strecke S, welche der Schneidstrahl 11 in Verfahrrichtung des Schneidkopfes 10 vom Ausgangspunkt zurückgelegt hat. In diesem Beispiel wird zu Beginn der Schneidstrahl 11 in Verfahrrichtung 13 beschleunigt und somit W reduziert. Anschliessend wird er mit einer konstanten, maximalen Verfahrgeschwindigkeit verfahren und W entsprechend auf einem konstanten minimalen Wert gehalten. Schliesslich wird er abgebremst und W entsprechend vergrössert.

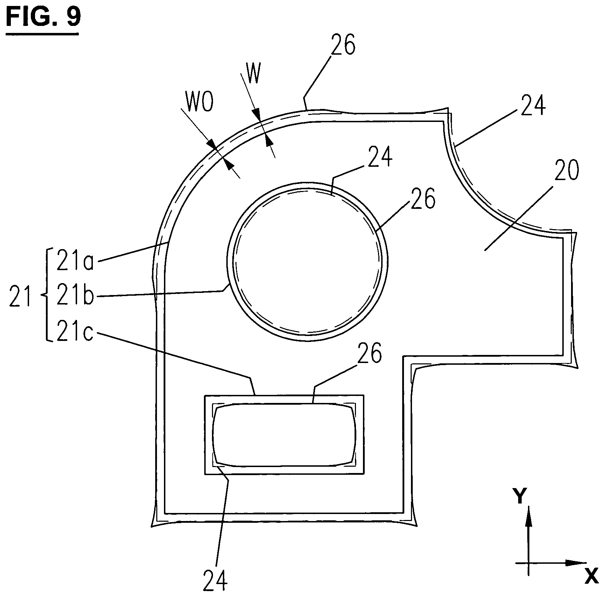

Fig. 9 zeigt das Beispiel des Werkstücks 20 aus Fig. 4, dessen Form durch die Kontur 21 definiert ist, welche sich aus der Aussenkontur 21a und den beiden Innenkonturen 21b und 21c zusammensetzt. Die gestrichelte Linie 24 entspricht der Bahn des Nullpunktes des Schneidstrahls 11 bei einem konstanten Wert W0 für den Abstand von der Kontur 21, wobei der Arbeitsabstand d ebenfalls konstant ist.

Die ausgezogene Linie 26 entspricht der korrigierten Bahn des Schneidstrahls 11, bei welcher der Abstand W an die aktuelle Verfahrgeschwindigkeit V angepasst ist. Der Unterschied zwischen den beiden Bahnen 24 und 26 ergibt die Korrektur K, die in Bezug auf den konstanten Wert W0 eingestellt wird, K=W-W0, und entspricht der Verbesserung in der lokalen Genauigkeit, mit welcher das Werkstück 20 am jeweiligen Punkt der Bearbeitungsbahn geschnitten wird.

Im vorliegenden Beispiel wird der Schneidstrahl 11 auf den geraden Abschnitten der Kontur 21 mit derselben Verfahrgeschwindigkeit V verfahren, so dass dort für die Korrektur gilt K=0. Wird jedoch der Schneidstrahl 11 in der Richtung geändert, so ändert sich V. Entsprechend wird der Abstand W angepasst, so dass die Korrektur K positiv oder negativ ist (vgl. den Unterschied der Bahnen 24 und 26 in die Ecken sowie bei den gekrümmten Linien der Kontur 21).

Das in den obigen Abschnitten A) und B) erwähnte Programm zur Berechnung der zeitlichen Bewegung des Schneidkopfes 10 bzw. des Schneidstrahles 11 kann z. B. in der Steuerung 15 gespeichert sein und vorgängig zum Schneidprozess ablaufen. Es ist auch denkbar, das Programm auf einem externen Computersystem laufen zu lassen und die Rechnungsdaten anschliessend auf die Steuerung 15 zu übertragen. Im Weiteren ist es denkbar, die Steuerung so einzurichten, dass die Bewegung des Schneidkopfes 10 während dem Schneidprozess laufend berechnet wird.

Aus der vorangehenden Beschreibung sind dem Fachmann zahlreiche Abwandlungen zugänglich, ohne den Schutzbereich der Erfindung zu verlassen, der durch die Ansprüche definiert ist.

So ist es denkbar, das Programm zur Berechnung der zeitlichen Bewegung des Schneidstrahles so auszugestalten, dass bei der Berechnung des Abstandes W die beiden, in den obigen Abschnitten A) und B) beschriebenen Korrekturen zusammen berücksichtigt werden, um so mittels des Schneidstrahls besonders präzise entlang der gewünschten Trennlinie schneiden zu können.

Im Weiteren kann die Trennvorrichtung so ausgebildet sein, dass der Schneidkopf zusätzlich zu den drei Linearachsen, entlang welchen er bewegt werden kann, rotierbar ist. Z. B. kann der Schneidkopf rotierbar um die Achse sein, welche durch die Ausbreitungsrichtung des Schneidstrahls definiert ist, und/oder rotierbar quer zu dieser Achse und/oder rotierbar um eine beliebige andere Achse.

## Patentansprüche

1. Verfahren zum Trennen einer Materialschicht (20) entlang einer vorgegebenen Trennlinie (21) mittels eines Schneidstrahls (11), der beim Trennen so verfahren wird, dass er um einen Abstand W seitlich versetzt zur Trennlinie (21) auf die Materialschicht (20) auftrifft, **dadurch gekennzeichnet, dass**
der Abstand W in Abhängigkeit der Änderungen in der Verfahrgeschwindigkeit (V), mit welcher der Schneidstrahl (11) verfahren wird, festgelegt wird, wobei sich bei einer Änderung des Schneidstrahls (11) in der Richtung die Verfahrgeschwindigkeit (V) ändert und der Abstand W entsprechend angepasst wird, so dass die Korrektur K gegeben durch K=W-W0, wobei W0 ein konstanter Wert ist, positiv oder negativ ist.

2. Verfahren zum Trennen einer Materialschicht (20) entlang einer vorgegebenen Trennlinie (21) mittels eines Schneidstrahls (11), der beim Trennen so verfahren wird, dass er um einen Abstand (W) seitlich versetzt zur Trennlinie (21) auf die Materialschicht (20) auftrifft, **dadurch gekennzeichnet, dass**
der Abstand (W) in Abhängigkeit der Abweichungen des wirksamen Schneidstrahlquerschnittes von einer kreisrunden Form festgelegt wird.

3. Verfahren nach einem der vorangehenden Ansprüche, wobei der Schneidstrahlquerschnitt erfasst und diesem eine geometrische Form zugeordnet wird.

4. Verfahren nach Anspruch 3, wobei die geometrische Form eine Ellipse (a, b, α) oder eine Folge einer Anzahl Punkte (Pj) ist.

5. Verfahren nach einem der vorangehenden Ansprüche, wobei die Trennlinie (21) sich aus Abschnitten (21a, 21b, 21c) mit verschiedenen Krümmungen zusammensetzt und die Verfahrgeschwindigkeit (V) sowie der Abstand (W) in Abhängigkeit der Krümmungen festgelegt werden.

6. Verfahren nach einem der vorangehenden Ansprüche, wobei der Schneidstrahl (11) auf einem ersten Abschnitt der Trennlinie (21) mit einer Verfahrgeschwindigkeit V1 bei einem Abstand W1 verfahren wird und auf einem zweiten, dem ersten Abschnitt nachfolgenden Abschnitt der Trennlinie (21) mit einer Verfahrgeschwindigkeit V2 bei einem Abstand W2, der wie folgt festgelegt wird:
- der Abstand W2 wird grösser als der Abstand W1 festgelegt, wenn die Verfahrgeschwindigkeit V2 kleiner als V1 ist,
- der Abstand W2 wird kleiner als der Abstand W1 festgelegt, wenn die Verfahrgeschwindigkeit V2 grösser als V1.

7. Verfahren nach einem der vorangehenden Ansprüche, wobei der Schneidstrahl (11) aus einem Schneidkopf (10) austritt, der um mindestens eine Achse um einen Rotationswinkel rotierbar ist und/oder der um einen Neigungswinkel gegenüber der Vertikalen geneigt angeordnet ist.

8. Verfahren nach Anspruch 7, wobei dem wirksamen Schneidstrahlquerschnitt in Abhängigkeit des Rotationswinkels und/oder Neigungswinkels eine geometrische Form zugeordnet wird.

9. Verfahren nach einem der vorangehenden Ansprüche, wobei der Schneidstrahl (11) gebildet ist aus einer Flüssigkeit mit oder ohne Abrasivteilchen, aus Gas und/oder aus Photonen.

10. Trennvorrichtung zum Trennen einer Materialschicht (20) entlang einer vorgegebenen Trennlinie (21) mittels eines Schneidstrahls (11), mit einem verfahrbaren Schneidkopf (10), aus welchem beim Trennungsprozess der Schneidstrahl (11) austritt, **dadurch gekennzeichnet dass** die Trennvorrichtung mit einem Programm ausgestattet ist, bei dessen Ausführung mindestens einer der folgenden Schritte a) und b) durchgeführt wird:
a) der Schneidstrahl (11) trifft um einen Abstand W seitlich versetzt zur Trennlinie (21) auf die Materialschicht (20) auf, wobei der Abstand W in Abhängigkeit der Änderungen in der Verfahrgeschwindigkeit (V), mit welcher der Schneidstrahl (11) verfahren wird, festgelegt wird, wobei sich bei einer Änderung des Schneidstrahls (11) in der Richtung die Verfahrgeschwindigkeit (V) ändert und der Abstand W entsprechend angepasst wird, so dass die Korrektur K gegeben durch K=W-W0, wobei W0 ein konstanter Wert ist, positiv oder negativ ist
b) der Schneidstrahl (11) trifft um einen Abstand (W) seitlich versetzt zur Trennlinie (21) auf die Materialschicht (20) auf, wobei der Abstand (W) in Abhängigkeit der Abweichungen des wirksamen Schneidstrahlquerschnittes von einer kreisrunden Form festgelegt wird.

11. Trennvorrichtung nach Anspruch 10, wobei der Schneidkopf (10) um mindestens eine Achse rotierbar ist und/oder gegenüber der Vertikalen geneigt angeordnet ist.

12. Trennvorrichtung nach Anspruch 10 oder 11, welche eine numerische Steuerung (15) aufweist.

13. Verwendung des Verfahrens nach einem der Ansprüche 1 bis 9 und/oder der Trennvorrichtung nach einem der Ansprüche 10 bis 12 zum Trennen einer Materialschicht (20).

## Claims

1. Method for cutting a material layer (20) along a predetermined cutting line (21) by means of a cutting beam (11), which during the cutting process is moved such that it impinges on the material layer (20) laterally offset by a distance W from the cutting line (21), **characterized in that**
the distance W is determined as a function of the variations of the travelling speed (V) at which the cutting beam (11) is moved, wherein the travelling speed (V) is changed when the direction of cutting beam (11) is changed and the distance W is corrected accordingly such that the correction K given by K=W-W0 is positive or negative with W0 being a constant value.

2. Method for cutting a material layer (20) along a predetermined cutting line (21) by means of a cutting beam (11), which during the cutting process is moved such that it impinges on the material layer (20) laterally offset by a distance (W) from the cutting line (21), **characterized in that**
the distance (W) is determined as a function of the deviations of the effective cutting beam cross-section from a circular shape.

3. Method according to any one of the preceding claims, wherein the cutting beam cross-section is determined and a geometrical shape is assigned thereto.

4. Method according to claim 3, wherein the geometrical shape is an ellipse (a, b, α) or a sequence of a number of points (Pj).

5. Method according to any one of the preceding claims, wherein the cutting line (21) is composed of sections (21a, 21b, 21c) of different curvatures and the travelling speed (V) as well as the distance (W) are determined as a function of the curvatures.

6. Method according to any one of the preceding claims, wherein on a first section of the cutting line (21), the cutting beam (11) is moved with a travelling speed V1 at a distance W1 and, on a second section of the cutting line (21) that succeeds the first section, with a travelling speed V2 at a distance W2, which is set as follows:
- the distance W2 is set greater than the distance W1 when the travelling speed V2 is smaller than V1,
- the distance W2 is set smaller than the distance W1 when the travelling speed V2 is greater than V1.

7. Method according to any one of the preceding claims, wherein the cutting beam (11) is discharged from a cutting head (10), which is rotatable around at least one axis by a rotation angle and/or is inclined by an inclination angle with respect to the vertical direction.

8. Method according to claim 7, wherein a geometrical shape is assigned to the effective cutting beam cross-section in function of the rotation angle and/or the inclination angle.

9. Method according to any one of the preceding claims, wherein the cutting beam (11) is formed of a liquid with or without abrasive particles, of gas and/or of photons.

10. Cutting device for cutting a material layer (20) along a predetermined cutting line (21) by means of a cutting beam (11), including a movable cutting head (10) from which the cutting beam (11) is discharged during the cutting process, **characterized in that** the cutting device is equipped with a program on execution of which at least one of the following steps a) and b) is performed:
a) the cutting beam (11) impinges on the material layer (20) laterally offset by a distance W from the cutting line (21), wherein the distance W is determined as a function of the variations of the travelling speed (V) at which the cutting beam (11) is moved, wherein the travelling speed (V) is changed when the direction of cutting beam (11) is changed and the distance W is corrected accordingly such that the correction K given by K=W-W0 is positive or negative with W0 being a constant value
b) the cutting beam (11) impinges on the material layer (20) laterally offset by a distance (W) from the cutting line (21), wherein the distance (W) is determined as a function of the deviations of the effective cutting beam cross-section from a circular shape.

11. Cutting device according to claim 10, wherein the cutting head (10) is rotatable around at least one axis and/or is inclined with respect to the vertical direction.

12. Cutting device according to claim 10 or 11, comprising a numerical control unit (15).

13. Use of the method according to any one of claims 1 to 9 and/or of the cutting device according to any one of claims 10 to 12 for cutting a material layer (20).

## Revendications

1. Procédé de séparation d'une couche de matériau (20) le long d'une ligne de séparation (21) prédéterminée au moyen d'un jet de coupe (11) lequel est déplacé de telle manière pendant la séparation que son point d'impact sur la couche de matériau (20) est latéralement décalé d'un écart W par rapport à la ligne de séparation (21), **caractérisé en ce que**
l'écart W est déterminé en fonction des variations de la vitesse de déplacement (V) à laquelle le jet de coupe (11) est déplacé, la vitesse de déplacement (V) variant lors d'un changement de direction du jet de coupe (11), et l'écart W étant adapté corrélativement de telle manière que la correction K, définie par K=W-W0, où W0 est une valeur constante, est positive ou négative.

2. Procédé de séparation d'une couche de matériau (20) le long d'une ligne de séparation (21) donnée au moyen d'un jet de coupe (11) lequel est déplacé de telle manière pendant la séparation que son point d'impact sur la couche de matériau (20) est latéralement décalé d'un écart (W) par rapport à la ligne de séparation (21), **caractérisé en ce que**
l'écart (W) est déterminé en fonction des déviations de la section transversale utile du jet de coupe d'une forme circulaire.

3. Procédé selon l'une des revendications précédentes, où la section transversale du jet de coupe est détectée et une forme géométrique y est attribuée.

4. Procédé selon la revendication 3, où ladite forme géométrique est une ellipse (a, b, α) ou une suite d'un nombre de points (Pj).

5. Procédé selon l'une des revendications précédentes, où la ligne de séparation (21) est composée de sections (21a, 21b, 21c) de différentes courbures et la vitesse de déplacement (V) ainsi que l'écart (W) sont déterminés en fonction desdites courbures.

6. Procédé selon l'une des revendications précédentes, où le jet de coupe (11) est déplacé sur un premier tronçon de la ligne de séparation (21) à une vitesse de déplacement V1 et à un écart W1 et sur un deuxième tronçon de la ligne de séparation (21), consécutif audit premier tronçon, à une vitesse de déplacement V2 et à un écart W2, lequel est déterminé comme suit:
- l'écart W2 est choisi supérieur à l'écart W1 lorsque la vitesse de déplacement V2 est inférieure à V1,
- l'écart W2 est choisi inférieur à l'écart W1 lorsque la vitesse de déplacement V2 est supérieure à V1.

7. Procédé selon l'une des revendications précédentes, où le jet de coupe (11) est émis d'une tête de coupe (10) laquelle est rotative sur un angle de rotation autour d'au moins un axe et/ou qui est agencé à un angle d'inclinaison par rapport à la verticale.

8. Procédé selon la revendication 7, où une forme géométrique est attribuée à la section transversale utile du jet de coupe en fonction de l'angle de rotation et/ou de l'angle d'inclinaison.

9. Procédé selon l'une des revendications précédentes, où le jet de coupe (11) est formé d'un liquide comprenant ou non des particules abrasives, d'un gaz et/ou de photons.

10. Dispositif de séparation permettant de séparer une couche de matériau (20) le long d'une ligne de séparation (21) prédéterminée au moyen d'un jet de coupe (11), comprenant une tête de coupe (10) déplaçable de laquelle est émis le jet de coupe (11) pendant le processus de séparation, **caractérisé en ce que** le dispositif de séparation est équipé d'un programme lors de l'exécution duquel l'une au moins des étapes suivantes a) et b) est mise en oeuvre:
a) le point d'impact du jet de coupe (11) sur la couche de matériau (20) est latéralement décalé d'un écart W par rapport à la ligne de séparation (21), l'écart W étant déterminé en fonction des variations de la vitesse de déplacement (V) à laquelle le jet de coupe (11) est déplacé, la vitesse de déplacement (V) variant lors d'un changement de direction du jet de coupe (11), et l'écart W étant adapté corrélativement de telle manière que la correction K, définie par K=W-W0, où W0 est une valeur constante, est positive ou négative
b) le point d'impact du jet de coupe (11) sur la couche de matériau (20) est latéralement décalé d'un écart (W) par rapport à la ligne de séparation (21), l'écart (W) étant déterminé en fonction des déviations de la section transversale utile du jet de coupe d'une forme circulaire.

11. Dispositif de séparation selon la revendication 10, où la tête de coupe (10) est rotative autour d'au moins un axe et/ou agencé à une inclinaison par rapport à la verticale.

12. Dispositif de séparation selon la revendication 10 ou 11, lequel comporte une commande numérique (15).

13. Utilisation du procédé selon l'une des revendications 1 à 9 et/ou du dispositif de séparation selon l'une des revendications 10 à 12 pour la séparation d'une couche de matériau (20).
